# FASCICULE DE BREVET EUROPEEN

(11) **EP 1 193 947 B1**
(45) Date de publication et mention de la délivrance du brevet: **05.04.2006**
(21) Numéro de dépôt: 01402225.5
(22) Date de dépôt: 30.08.2001
(51) Int. Cl.: H04L 29/06

(54) **Système de communication basé sur le langage WSDL**
Kommunikationsystem auf basis von WDSL sprache
Communications system based on the WSDL language

(30) Priorité: 31.08.2000 FR 0011320
(43) Date de publication de la demande: 03.04.2002
(73) Titulaire: Schneider Automation, 06560 Valbonne (FR)
(72) Inventeur: Stawikowski, Jean-Marie, 06600 Antibes (FR)

(56) Documents cités:
- WO-A-99/13418
- WO-A-99/63409
- D. BOX, D. EHNEBUSKE, G. KAKIVAYA ET AL.: "Simple Access Object Protocol (SOAP) version 1.1" WWW.W3.ORG, WORLD WIDE WEB CONSORTIUM., 8 mai 2000 (2000-05-08), XP002163943
- CHRISTENSEN E ET AL: "Web Sevices Description Language (WSDL) 1.0" IBM DEVELOPERWORKS - WEB ARCHITECTURE DOCUMENT SERIES, 25 septembre 2000 (2000-09-25), XP002177814 Extrait de l'Internet: <URL:http://www-4.ibm.com/software/develop er/library> [extrait le 2001-09-18]
- [en ligne] MICROSOFT PRESS RELEASE 11-07-2000: 'Microsoft Publishes Key Specifications for Web Services - Adds to SOAP Technologies With SOAP Contact Language and Discovery Specifications' Extrait de l'Internet: <URL:http://www.microsoft.com/presspass/pre ss/2000/Jul00/PDCWebServicesPR.asp> [extrait le 2004-04-22]

## Description

La présente invention concerne un système de communication et un procédé de communication sur un réseau global de type Internet, Intranet ou Extranet, entre au moins un équipement d'automatisme offrant une ou plusieurs fonctions d'automatisme dans une application d'automatisme et au moins un appareil distant. Le système de communication utilise le langage WSDL (Web Services Description Language) grâce à au moins un service WEB conforme au langage WSDL pouvant interagir avec un programme de l'équipement d'automatisme. Un tel système de communication peut s'appliquer à toute application d'automatisme appartenant notamment au domaine des automatismes industriels, des automatismes du bâtiment ou du contrôle/commande des réseaux électriques de distribution.

Sous le terme "équipement d'automatisme", on désignera ci-après un automate programmable, une commande numérique, une station de contrôle/commande mais aussi tout équipement ou module d'automatisme possédant au moins une unité de traitement, capable de se connecter sur un réseau IP (Internet Protocol) tel que défini au paragraphe suivant, et capable d'exécuter un programme pour offrir une ou plusieurs fonctions d'automatisme dans une application d'automatisme. On inclura ainsi dans cette définition un module métier ou un module d'entrées/sorties d'un automate programmable, un terminal de dialogue, un variateur de vitesse, etc....

Il est connu qu'un tel équipement d'automatisme puisse intégrer un serveur WEB de façon à pouvoir échanger des données relatives à l'équipement d'automatisme avec un client WEB distant, tel qu'un navigateur, connecté à un réseau de communication global. Ce réseau global est de type Internet, Intranet ou Extranet, conforme à la norme TCP/IP ou à la norme UDP/IP, et sera appelé "réseau IP" dans la suite de l'exposé. Ces fonctionnalités sont décrites notamment dans les documents WO9913418, US6061603 et US5805442. Les données relatives à l'équipement d'automatisme sont alors mises en forme et expédiées par le serveur WEB, par exemple sous forme de pages HTML ou XML (eXtended Markup Language). Il est également possible qu'un serveur WEB implanté dans un équipement d'automatisme puisse charger un programme, généralement appelé Applet, dans un appareil distant, lequel programme se déroule dans l'appareil distant de façon à échanger avec le serveur WEB de l'équipement d'automatisme des requêtes transportées par le protocole IP.

Sous le terme "appareil distant", on désignera ci-après soit un ordinateur individuel, un téléphone portable, un appareil de type PDA (Personal Digital Assistant), soit un serveur informatique, tel qu'un serveur d'applications ASP (Applications Service Provider), un serveur d'applications (J2EE, .NET, ...), un serveur WEB, un serveur WAP, un serveur de système de gestion de bases de données (SGBD), un serveur de progiciel de gestion intégré (PGI), un serveur ERP (Enterprise Resource Planning), un serveur EAI (Enterprise application intégration), un serveur de gestion électronique de documents (GED), un serveur de commerce électronique interentreprises (B-to-B), une station de programmation d'un équipement d'automatisme ou tout autre système informatique. Par appareil distant, on peut aussi désigner un ensemble d'appareils distants communicant entre eux. Un appareil distant comporte au moins une unité de traitement, est capable de se connecter à au moins un équipement d'automatisme par un réseau IP et d'exécuter un programme ou un ensemble de programmes informatiques. Certains équipements d'automatisme, tels que des terminaux de dialogue, peuvent également être considérés comme des appareils distants.

Sous le terme "appareil intermédiaire", on désignera ci-après un appareil distant qui est connecté à un ou plusieurs appareils distants et à un ou plusieurs équipements d'automatisme. L'appareil intermédiaire a pour rôle d'être le mandataire (Proxy) de l'équipement d'automatisme. Il est par ailleurs capable de recevoir et d'émettre sur le réseau IP des requêtes encodées selon des protocoles spécifiques aux équipements d'automatisme et il peut interagir avec un programme d'un équipement d'automatisme. Certains appareils intermédiaires, tels que les modules de communications réseau ou les équipements de communications réseau, peuvent également être considérés comme des équipements d'automatisme.

Le langage WSDL (Web Services Description Language), est un langage permettant de décrire des services WEB de façon simple dans un environnement distribué et décentralisé. Un service WEB est une application modulaire basée sur Internet, qui exécute des tâches précises et qui respecte un format spécifique. Le langage WSDL est basé sur le langage XML (eXtensible Markup Language) et peut être utilisé en combinaison avec plusieurs autres protocoles du WEB tels que SOAP (Simple Object Access Protocol), HTTP (Hyper Text Transfer Protocol), HTTPS (Hyper Text Transfer Protocol / Secure Socket Layer), MIME (Multipurpose Internet Mail Extensions), SMTP (Simple Mail Transfer Protocol), FTP (File Transfer Protocol) ou avec le protocole IP (Internet Protocol). Le langage WSDL est basé sur des schémas XML et fournit un vocabulaire définissant une structure, un contenu et une syntaxe de description de communication. Ce langage est déposé au W3C (World Wide Web Consortium) et fait l'objet à l'heure actuelle d'une note WSDL 1.1 publiée le 15 mars 2001 et disponible à l'adresse : http://www.w3.org/TR/wsd1.

Le terme "liaison WSDL" (en anglais "binding") spécifie les informations concrètes relatives au protocole et au format de données pour une entité abstraite, telle qu'un message ou une opération définis pour un "PortType" particulier. Une liaison WSDL réfère au processus associant les informations relatives au protocole et au format de données à une entité abstraite. Un "PortType" est une série nommée d'opérations abstraites dans laquelle chaque opération réfère à un message d'entrée et à des messages de sortie, un message représentant une définition abstraite d'un type de données transmises (par exemple: string, boolean,...). Une liaison WSDL est conforme au langage WSDL et est basée sur le langage XML.

Le langage WSDL autorise des éléments d'extension, représentant une liaison spécifique d'une technologie donnée. Ainsi, une liaison WSDL (binding) se définit comme une extension du langage WSDL pour des protocoles supportés et décrits dans le document de spécification WSDL, que sont SOAP, HTTP GET/POST ou MIME. Elle accepte également d'autres extensions du langage WSDL pour des protocoles non spécifiques au langage WSDL en particulier pour des protocoles qui sont utilisés dans des équipements d'automatisme, tels que par exemple les protocoles PROFInet, EtherNet/IP, MODBUS/TCP, etc...

Il serait particulièrement intéressant, pour le concepteur d'une application informatique dans un appareil distant utilisant des outils de développement de plus en plus répandus sur le marché ou pour un utilisateur d'une application informatique quelconque, comme par exemple un navigateur (browser), un servlet JAVA, une application JSP (Java Server Pages), une application ASP (Active Server Pages), etc... s'exécutant sur un serveur d'applications ou sur un serveur WEB, de pouvoir directement échanger des données sur un réseau IP avec un ou plusieurs équipements d'automatisme et ceci grâce au langage WSDL. En effet, en adaptant l'équipement d'automatisme à des langages de description de services WEB issus du monde informatique, un équipement d'automatisme pourrait ainsi communiquer, par l'intermédiaire de services WEB, avec une application informatique distante développée séparément avec des outils de développement du monde informatique, ouvrant ainsi largement les domaines des automatismes au domaine de l'Internet. Le langage WSDL facilite la distribution des applications sous la forme de services WEB notamment puisque le langage WSDL offre une syntaxe XML permettant de donner un format de description des services WEB.

Le langage WSDL constitue une des briques pour la conception d'applications WEB, indépendamment de la plate-forme, du modèle objet et du langage de programmation utilisés. Cet élément est essentiel pour obtenir l'instauration d'un dialogue direct entre applications. Grâce au langage WSDL, l'accès à un équipement d'automatisme à l'aide de services WEB sous la forme d'une interface programmable conforme au langage WSDL présente un avantage majeur : le concepteur de toute application informatique peut ainsi utiliser ces services WEB pour échanger des informations avec un équipement d'automatisme sans se préoccuper de concevoir une interface utilisateur spécifique. De plus, grâce à un document de description de service, il est en mesure de connaître à tout moment les services WEB qu'un équipement d'automatisme donné est capable d'offrir.

Ainsi, le langage WSDL peut être vu comme le complément du protocole SOAP car il facilite l'interopérabilité des services WEB. L'accès à un équipement d'automatisme devient standard avec le protocole SOAP comme langage de structuration de messages et avec le langage WSDL pour décrire les services WEB. Grâce au langage WSDL, les applications qui utilisent le protocole SOAP sont capables d'automatiser les échanges entre services WEB, tout en masquant la plupart des détails techniques de bas niveau. D'autre part, le langage WSDL peut être vu également comme le complément d'UDDI (Universal Description, Discovery and Integration), l'annuaire universel qui stocke les références de documents décrivant les capacités de services WEB.

Pour cela, l'invention décrit un système de communication sur un réseau IP entre un équipement d'automatisme comportant au moins une unité de traitement capable d'exécuter au moins un programme pour fournir des fonctions d'automatisme et un ou plusieurs appareils distants exécutant une ou plusieurs applications informatiques. Le système de communication est conforme au langage WSDL (Web Services Description Language) dans le but de fournir à un appareil distant des fonctions de surveillance, de visualisation, de contrôle, de configuration ou de programmation de l'équipement d'automatisme. Le système de communication utilise au moins un document de description de service, conforme au langage WSDL, qui décrit les capacités d'un ou plusieurs services WEB capables d'interagir avec un programme de l'équipement d'automatisme. Chaque document de description de service est accessible, pour un appareil distant, par une adresse URL, URI ou IP, à travers une interface réseau IP. Grâce à un document de description de service, une application informatique, exécutée dans un appareil distant est capable de communiquer avec un service WEB au moyen de messages encodés selon un protocole de communication conforme à au moins une liaison WSDL (binding) décrite dans le document de description de service. L'application informatique utilise un interpréteur de documents WSDL pour générer un comportement correspondant au document de description de service, ou une application de développement utilise un générateur de codes pour générer du code de l'application informatique correspondant au document de description de service.

Selon une caractéristique, au moins une liaison WSDL (binding) décrite dans un document de description de service est conforme à un des protocoles SOAP, HTTP ou MIME. Selon une autre particularité, au moins une liaison WSDL décrite dans un document de description de service est conforme à un protocole spécifique aux équipements d'automatisme.

Selon une autre caractéristique, le système de communication comporte un générateur de document de description de service capable, à la suite d'une demande émanant d'un appareil distant, de construire dynamiquement un document de description de service relatif à un équipement d'automatisme et accessible, pour un appareil distant, par une adresse URL, URI ou IP, à travers une interface réseau IP.

L'invention concerne également un procédé de communication mis en oeuvre dans un système de communication sur un réseau IP entre un équipement d'automatisme comportant au moins une unité de traitement capable d'exécuter au moins un programme pour fournir des fonctions d'automatisme et un ou plusieurs appareils distants exécutant une ou plusieurs applications informatiques. Le procédé comporte les étapes suivantes :
- Une première étape de découverte de service WEB, dans laquelle une application informatique ou une application de développement, s'exécutant dans un appareil distant, émet sur le réseau IP une requête pour recevoir, dans une réponse, un ou plusieurs documents de description de service conformes au langage WSDL et décrivant les capacités d'un ou plusieurs services WEB capables d'interagir avec un programme de l'équipement d'automatisme,
- Une deuxième étape de génération dans laquelle, soit l'application informatique utilise un interpréteur de documents WSDL pour générer un comportement correspondant au document de description de service, soit l'application de développement utilise un générateur de codes pour générer du code de l'application informatique correspondant au document de description de service, de manière à ce que l'application informatique d'un appareil distant communique avec un service WEB au moyen de messages conformes au protocole de communication décrit dans le document de description de service,
- Une troisième étape de communication sur le réseau IP entre l'application informatique d'un appareil distant, et au moins un service WEB implanté dans l'équipement d'automatisme, au moyen de messages encodés selon un protocole de communication conforme à au moins une liaison WSDL (binding) décrite dans le document de description de service, dans le but de fournir à l'appareil distant des fonctions de surveillance, de visualisation, de contrôle, de configuration ou de programmation de l'équipement d'automatisme.

D'autres caractéristiques et avantages vont apparaître dans la description détaillée qui suit en se référant à un mode de réalisation donné à titre d'exemple et représenté par les dessins annexés sur lesquels :
- la figure 1 représente un premier exemple d'un système de communication conforme à l'invention entre un équipement d'automatisme comprenant un service WEB, et un premier appareil distant exécutant une application informatique, laquelle est partiellementou totalement générée au moyen d'une application de développement exécutée dans un second appareil distant,
- la figure 2 reprend la figure 1 dans lequel le service WEB est implanté dans un appareil intermédiaire,
- la figure 3 montre une variante du procédé de communication de la figure 1 dans lequel le document de description de service est mémorisé dans un serveur,
- la figure 4 représente un second exemple d'un système de communication conforme à l'invention entre un équipement d'automatisme comprenant un service WEB, et un appareil distant exécutant une application informatique laquelle comporte un interpréteur de document WSDL,
- la figure 5 reprend la figure 4 avec un service WEB implanté dans un appareil intermédiaire,
- la figure 6 reprend la figure 4 dans lequel le document de description de service est mémorisé dans un serveur,
- la figure 7 montre une variante de l'exemple de la figure 1 dans lequel tout ou partie d'une application informatique est générée directement dans un appareil distant à partir d'une application de développement exécutée dans le même appareil distant.

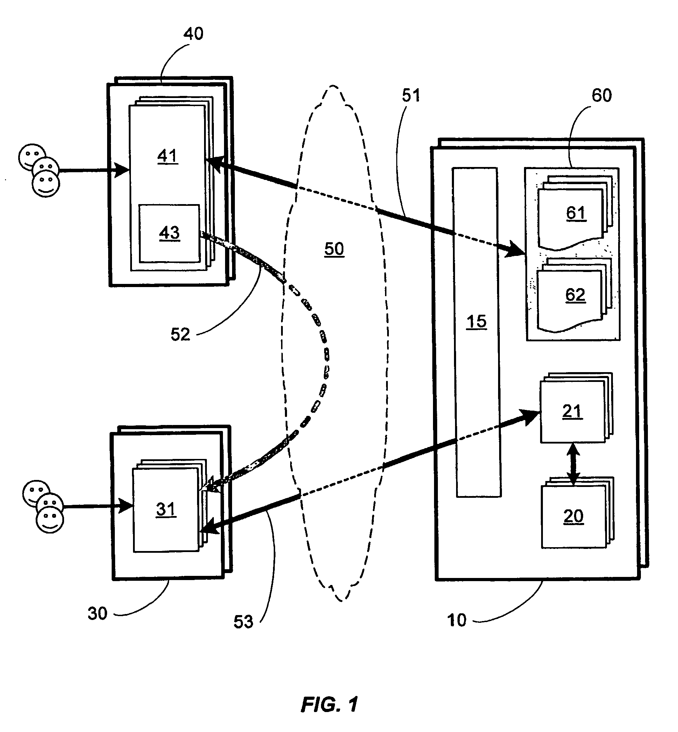

En référence à la figure 1, un équipement d'automatisme 10 est connecté par un réseau IP 50 à un premier appareil distant 30. L'équipement d'automatisme 10 comporte au moins une unité de traitement (non représentée) capable d'exécuter au moins un programme 20 permettant d'offrir une ou plusieurs fonctions d'automatisme à une application d'automatisme. Ce programme 20 peut être par exemple un programme application (ou programme utilisateur) permettant de faire le contrôle/commande d'une application d'automatisme ou peut être aussi directement le système d'exploitation embarqué dans l'équipement d'automatisme 10. L'équipement d'automatisme 10 comporte au moins un service WEB 21 capable d'interagir avec ledit programme 20. Pour communiquer sur le réseau IP 50, l'équipement d'automatisme 10 comporte une interface réseau IP 15 de type HTTP, HTTPS, SMTP, FTP, TCP, UDP ou IP.

Un service WEB est une ressource accessible sur un réseau IP à travers une interface réseau IP 15,15',15". Selon l'invention, un service WEB est capable de recevoir et d'émettre sur le réseau IP 50 des messages 53 encodés selon un des protocoles de communication conformes à une liaison WSDL (binding) décrite dans un document de description de service 61. Un service WEB est capable d'interagir avec un programme 20 d'un équipement d'automatisme 10. Cette ressource est décrite de façon formelle par une interface logicielle contenue dans un document de description de service 61. Une implémentation d'une telle interface logicielle est aussi appelée "service WEB" dans le présent exposé.

Le système de communication décrit dans la présente invention s'appuie sur un document de description de service 61 qui décrit les capacités d'un ou plusieurs services WEB 21,21' d'un équipement d'automatisme 10, c'est-à-dire qui décrit les services WEB qu'un équipement d'automatisme 10 est en mesure de fournir ou de proposer. Le document de description de service 61 est accessible par un appareil distant 30,40, soit à partir de ses ressources locales, soit à partir de ressources distantes identifiées par une adresse URL (Uniform Resource Locator), URI (Universal Resource Identifier) ou IP (Internet Protocol), à travers une interface réseau IP 15,15',15". Ainsi, grâce à un tel document 61, un appareil distant 30,40 quelconque est en mesure de savoir en permanence quels sont les services disponibles relatifs à un équipement d'automatisme 10. Un document de description de service 61 peut aussi contenir la description de plusieurs services WEB 21,21' standards, correspondant par exemple à des services implantés systématiquement dans toute une gamme bien identifiée d'équipements d'automatisme. De même, il peut aussi décrire un service WEB 21,21' particulier disponible sur toute une liste d'équipements d'automatisme distincts.

Un document de description de service 61 est un document qui est conforme au langage WSDL et qui décrit les capacités d'un service WEB. Selon une caractéristique de l'invention, le document de description de service 61 décrit au moins une liaison WSDL (binding) qui est conforme à un des protocoles supportés par le langage WSDL, tels que SOAP, HTTP ou MIME. Selon une autre caractéristique, le document de description de service 61 décrit au moins une liaison WSDL (binding) qui est conforme à un des protocoles spécifiques aux équipements d'automatisme, tels que notamment PROFInet, EtherNet/IP ou MODBUS/TCP.

Un document de description de service 61 spécifie pour chaque service un ensemble de requêtes (nom de la requête, nature et nom des paramètres, attributs de la requête) ainsi que le (ou les) protocole(s) devant être utilisé(s) pour invoquer la requête auprès de l'équipement d'automatisme 10. Le cas échéant, ce ou ces protocoles peuvent être sous-entendus. Le document de description de service 61 est conforme à un langage de description de service faisant référence au protocole SOAP ou au protocole HTTP, HTTPS et fournissant une grammaire s'appuyant sur le langage XML ou XML schémas définis par le W3C.

Un service WEB 21 pourrait aussi être décrit par plusieurs documents de description de service 61 conformes chacun à un langage de description de service différent, de façon à ce qu'un même équipement d'automatisme 10 puisse être accessible à différentes applications informatiques. Par ailleurs, un document de description de service 61 peut se présenter sous forme compressée dans un format de compression standard de fichiers ou de documents, tel que ZIP ou GZIP.

En référence à la figure 1, le premier appareil distant 30 comporte une unité de traitement (non représentée) capable d'exécuter au moins une application informatique 31 quelconque, comme par exemple un navigateur (browser), un servlet JAVA, une application JSP, une application ASP, etc.... Tout ou partie de cette application informatique 31 est générée et déployée 52 au moyen d'une application de développement 41, par exemple de type outil de développement, qui est exécutée par une unité de traitement dans un second appareil distant 40.

Pour cela, l'application de développement 41 comporte un générateur de code 43. Ce générateur de code 43 lit le document WSDL et génère automatiquement des interfaces et du code dans le langage de programmation utilisé qui correspondent aux opérations définies dans le document WSDL. Le générateur de code 43 utilise au moins une liaison WSDL (binding) conforme à au moins un des protocoles supportés par le langage WSDL, tels que SOAP, HTTP ou MIME. Dans l'exemple de la figure 1, l'application de développement 41 utilise, pour générer tout ou partie de l'application informatique 31, un document de description de service 61 qui est localisé dans l'équipement d'automatisme 10.

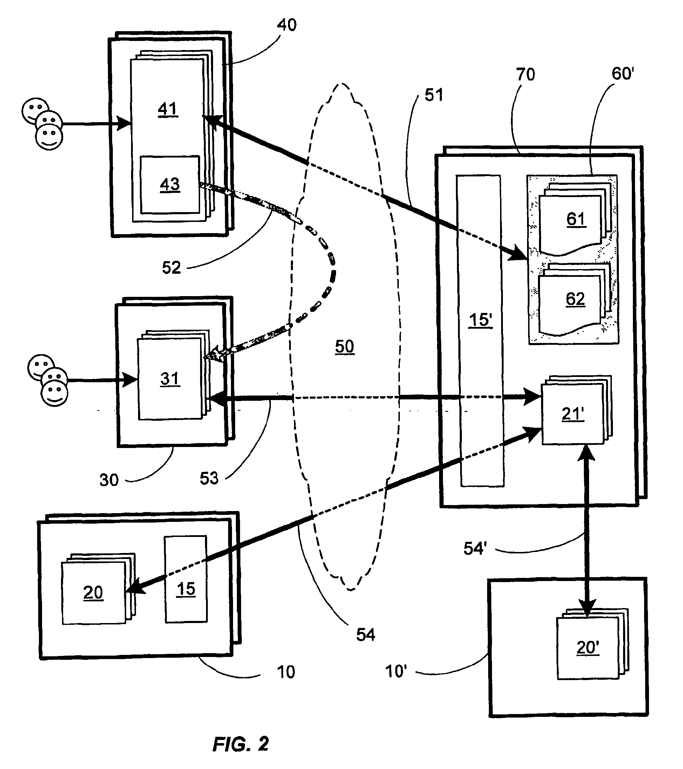

La figure 2 schématise une variante de la figure 1 dans laquelle est introduit un appareil intermédiaire 70 connecté à la fois aux appareils distants 30,40 et à l'équipement d'automatisme 10 au moyen d'une interface réseau 15'. L'appareil intermédiaire 70, qui peut être un serveur informatique, mémorise au moins un document de description de service 61 et un service WEB 21' relatif à l'équipement d'automatisme 10 et se comporte comme un mandataire (Proxy) qui est un représentant de l'équipement d'automatisme 10. Grâce à un tel mandataire, un appareil distant semble être connecté avec le véritable équipement d'automatisme 10 alors que ce n'est qu'avec le représentant de l'équipement d'automatisme 10. Le service WEB 21' de l'appareil intermédiaire 70 est capable de recevoir et d'émettre sur le réseau IP 50 des requêtes 54 encodées selon un ou plusieurs protocoles spécifiques aux équipements d'automatisme, tels que par exemple les protocoles PROFInet, EtherNet/IP, MODBUS/TCP,... de façon à interagir avec au moins un programme 20 d'un équipement d'automatisme 10. Selon une variante de l'invention, le service WEB 21' de l'appareil intermédiaire 70 est aussi capable de recevoir et d'émettre, sans passer par un réseau IP, des requêtes 54' encodées selon d'autres protocoles spécifiques aux équipements d'automatisme, tels que par exemple les protocoles MODBUS, Uni-TE, AS-i,... de façon à interagir avec au moins un programme 20' d'un équipement d'automatisme 10'.

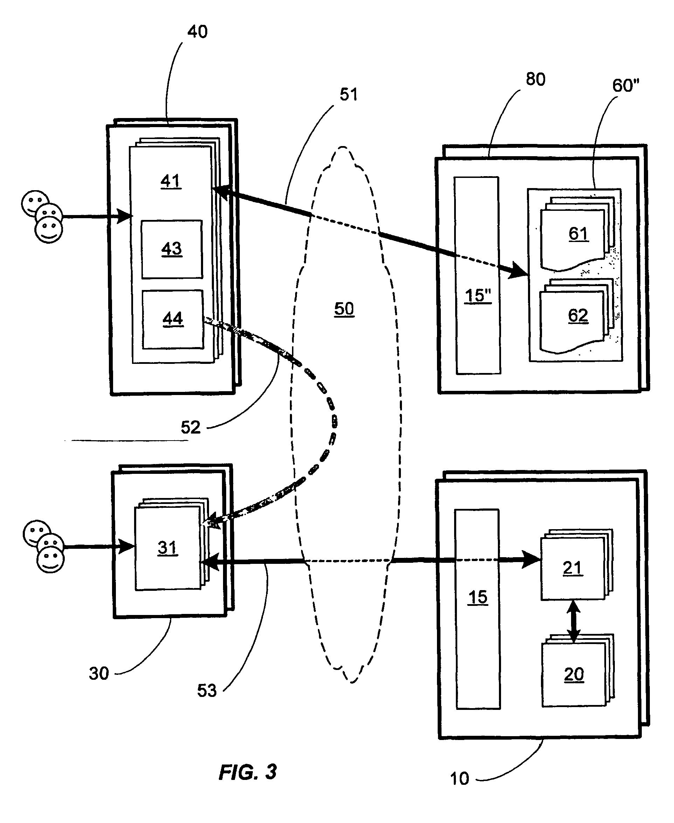

La figure 3 montre une autre variante du procédé de communication de la figure 1 dans lequel l'équipement d'automatisme 10 implante un service WEB 21 mais pas de document de description de service 61. Le(s) document(s) de description de service 61 est(sont) mémorisé(s) dans des moyens de stockage 60" d'un serveur 80. Ce serveur 80, tel qu'un serveur de fichiers ou autre, est capable, grâce à une interface réseau 15", de communiquer sur le réseau IP 50 avec des appareils distants 30,40 pour leur fournir un document de description de service 61.

Ainsi, un des avantages de la présente invention réside aussi dans le fait qu'un document de description de service 61 décrivant les services WEB d'un équipement d'automatisme 10 peut être construit de différentes manières. Il peut être mémorisé soit dans des moyens de stockage 60 situés dans l'équipement d'automatisme 10 (fig. 1), soit dans des moyens de stockage 60' d'un appareil intermédiaire 70 connecté à la fois à l'équipement d'automatisme 10 et à l'appareil distant 30,40 (fig. 2), soit dans des moyens de stockage locaux (disque dur, CD-ROM, DVD, ou autres) d'un appareil distant 40 communiquant avec l'équipement d'automatisme 10, soit des moyens de stockage distants 60" dans un serveur 80 accessible depuis l'appareil distant 40 (fig. 3) par une adresse URL,URI ou IP via le réseau IP 50.

Ces variantes sont intéressantes à cause de la taille limitée de la mémoire disponible dans la plupart des équipements d'automatisme 10. En effet, un équipement d'automatisme 10 n'ayant pas forcément une mémoire suffisante pour stocker en interne un ou plusieurs documents de description de service 61, il est intéressant de pouvoir stocker ce ou ces documents dans un appareil intermédiaire ou dans un serveur externe. C'est également avantageux lorsque, sur un même site, plusieurs équipements d'automatisme possèdent des services WEB similaires qui peuvent être décrit par un même document de description de service stocké dans un endroit unique. Par ailleurs, ce ou ces documents de description de service 61 sont parfois disponibles pour des utilisateurs sur des supports de type CD-ROM ou autre.

De plus, la figure 3 montre également l'utilisation, à la place du générateur de code 43, d'un générateur de code 44 spécifique aux équipements d'automatisme, étendant ainsi les capacités de l'application de développement 41 pour des protocoles qui sont spécifiques aux équipements d'automatisme. Le générateur de code 44 spécifique aux équipements d'automatisme peut être installé sous forme de module complémentaire ou "plug-in". Il lit le document WSDL et génère automatiquement des interfaces et du code dans le langage de programmation utilisé qui correspondent aux opérations définies dans le document WSDL. Le générateur 44 utilise au moins une liaison WSDL (binding) conforme avec à au moins un protocole spécifique aux équipements d'automatisme.

Par ailleurs, on pourrait envisager qu'au moins une liaison WSDL (binding) décrite dans un document de description de service 61 soit conforme à au moins une version encodée du protocole SOAP selon un format binaire. Dans une telle version encodée du protocole SOAP, un certain nombre de codes binaires prédéterminés remplaceraient systématiquement des expressions de textes plus longues qui existent dans le protocole SOAP, notamment pour des expressions de texte souvent employées. Cette version encodée présenterait alors l'avantage d'utiliser moins de caractères pour décrire un service WEB et donc d'être plus économe en taille mémoire, ce qui est un argument important pour un équipement d'automatisme disposant d'espace mémoire limité.

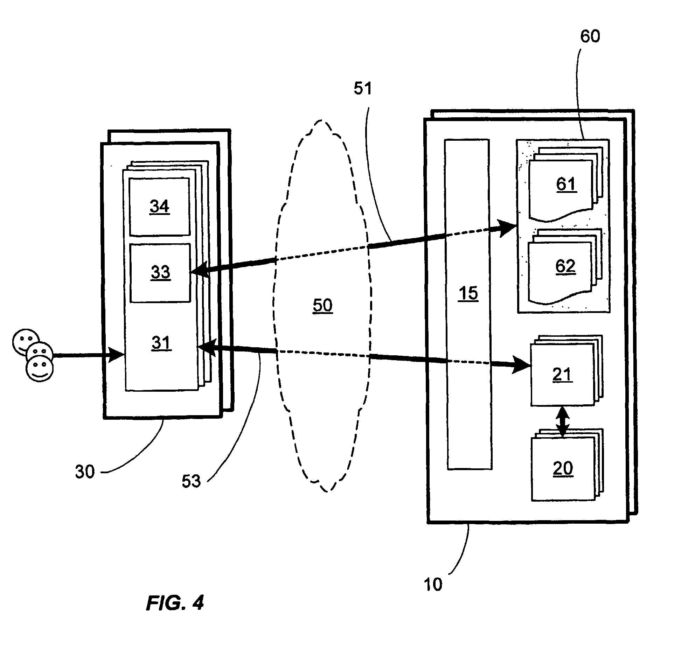

Dans la figure 4, un second exemple montre un système de communication entre un équipement d'automatisme 10 comprenant un service WEB 21, et un appareil distant 30 comprenant une application informatique 31, et qui utilise le document de description de service 61 localisé dans l'équipement d'automatisme 10. Contrairement à l'exemple de la figure 1, l'application informatique 31 comporte un interpréteur de document WSDL 33. Cet interpréteur de document WSDL 33 lit le document WSDL grâce à une requête de lecture 51 et génère automatiquement dans l'application informatique 31 un comportement, tel qu'une interface homme machine (IHM), qui correspond aux opérations définies dans le document WSDL. L'interpréteur 33 utilise au moins une liaison WSDL (binding) conforme avec à au moins un des protocoles supportés par le langage WSDL, tels que SOAP, HTTP ou MIME.

De façon équivalente, l'application informatique 31 peut aussi comporter un interpréteur de document WSDL 34 spécifique aux équipements d'automatisme, installé sous forme de module complémentaire ou "plug-in" de façon à étendre les capacités de l'application informatique 31. Cet interpréteur de document WSDL 34 est capable de lire le document WSDL grâce à une requête de lecture 51 et de générer automatiquement dans l'application informatique 31 un comportement, tel qu'une interface homme machine (IHM), qui correspond aux opérations définies dans le document WSDL. L'interpréteur de document WSDL spécifique aux équipements d'automatisme 34 utilise au moins une liaison WSDL (binding) conforme avec à au moins un protocole spécifique aux équipements d'automatisme.

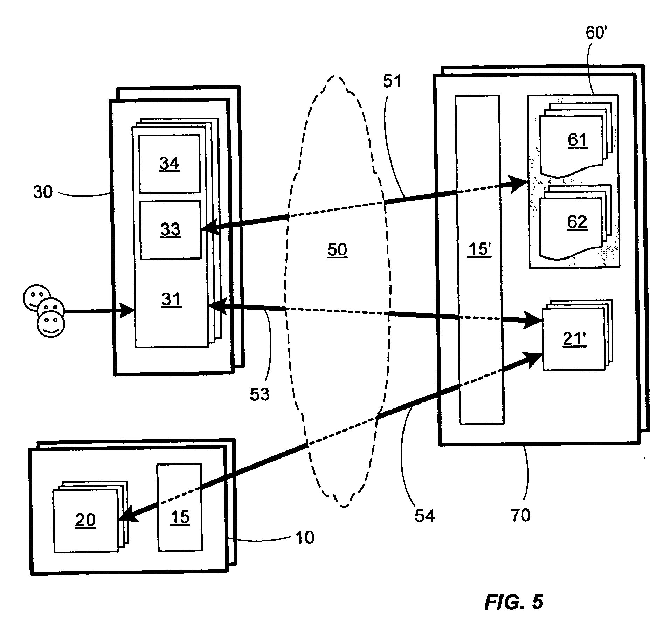

La figure 5 reprend la variante de la figure 2 adaptée à l'exemple de la figure 4. Un appareil intermédiaire 70, connecté à la fois aux appareils distants 30,40 et à l'équipement d'automatisme 10 au moyen d'une interface réseau 15', mémorise au moins un document de description de service 61 et un service WEB 21' relatif à l'équipement d'automatisme 10.

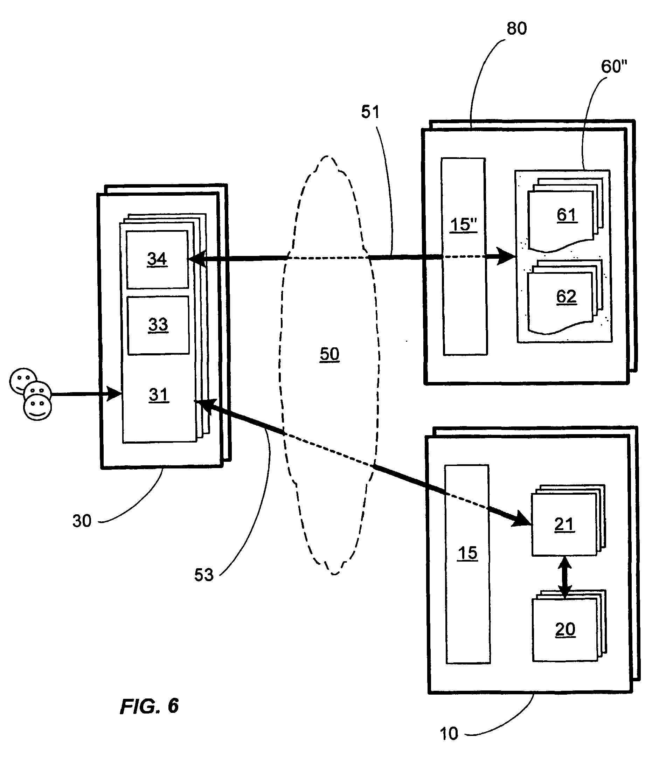

La figure 6 reprend la variante de la figure 3 adaptée à l'exemple de la figure 4 dans lequel l'équipement d'automatisme 10 implante un service WEB 21 mais pas de document de description de service 61. Le document de description de service 61 est mémorisé dans un serveur 80.

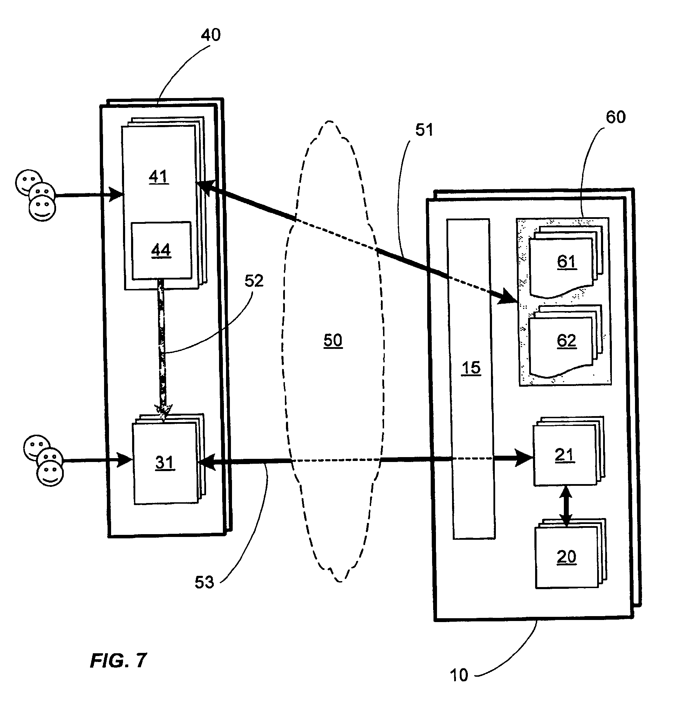

La figure 7 montre une variante de l'exemple de la figure 1 dans lequel un même appareil distant 40 comporte à la fois une application de développement 41 et une application informatique 31. L'application de développement 41 est alors capable de générer et déployer localement tout ou partie de l'application informatique 31 pour permettre à celle-ci de communiquer avec des services WEB 21 d'un équipement d'automatisme 10. Dans cet exemple, l'application de développement 41 comporte un générateur de code 44 spécifique aux équipements d'automatisme. Dans ce cas, on peut aussi envisager de façon équivalente que l'application de développement 41 soit un outil destiné au développement de programmes d'applications d'automatisme conformes à la norme IEC 1131-3.

Selon un autre mode de réalisation de l'invention, un document de description de service 61 peut être généré dynamiquement au moment où une application informatique 31 ou une application de développement 41 d'un appareil distant 30,40 émet une requête 51 pour accéder aux services disponibles dans un équipement d'automatisme 10. Cette fonctionnalité de génération dynamique permet de ne pas mémoriser systématiquement un document de description de service 61, mais de le générer sur demande et donc de pouvoir le faire évoluer à chaque demande, notamment quand la configuration de l'équipement d'automatisme 10 est modifiée (par exemple suite à une connexion ou déconnexion d'un module d'E/S dans un automate programmable 10). De plus, un équipement d'automatisme 10 peut souhaiter exposer ou cacher certains services WEB en fonction de son état ou en fonction de l'appareil distant 30,40 qui veut communiquer avec lui.

Pour cela, le système de communication comporte un générateur de document de description de service 62 qui est un programme capable de construire dynamiquement un document de description de service 61. De façon préférentielle, cette construction dynamique est réalisée grâce au générateur de document de description de service 62 lorsqu'un appareil distant 30,40 demande à accéder au document de description de service 61 de l'équipement d'automatisme 10. Dans ce cas, le document de description de service 61 n'a pas besoin d'être mémorisé puisqu'il est élaboré dynamiquement à chaque requête 51 émise par une application informatique vers le générateur de document de description de service 62. Cependant, dans certains cas, on pourrait aussi envisager une construction dynamique du document 61 initiée à la demande de l'équipement d'automatisme 10. De plus, on pourrait aussi envisager une solution mixte dans laquelle le générateur 62 serait capable de personnaliser dynamiquement un document de description de service 61, en s'appuyant sur un document standard déjà mémorisé pour une famille d'équipements, puis en adaptant ce document standard dynamiquement en fonction de l'état de l'équipement d'automatisme 10.

Pour obtenir un document de description de service 61, une requête de lecture 51 contient donc une adresse URL, URI ou IP qui pointe soit directement sur le document de description de service 61, soit sur un générateur de document de description de service 62 capable de construire dynamiquement le document de description de service 61. De la même façon qu'un document de description de service 61, un générateur de document de description de service 62 est donc accessible par une adresse URL, URI ou IP à travers une interface réseau 15,15',15". Il peut alors être mémorisé dans des moyens de stockage 60 de l'équipement d'automatisme 10 (figure 4), dans des moyens de stockage 60' d'un appareil intermédiaire 70 (figure 5), dans des moyens de stockage locaux d'un appareil distant 30,40 ou dans des moyens de stockage 60" distants d'un serveur 80 (figure 6).

L'exemple ci-dessous montre un document de description de service 61 appelé *"Document1"* conforme au langage WSDL qui décrit la fonction *"Read"* possédant une entrée *"ReadInput"* nommée *"Variable"* et une sortie *"ReadOutput"* nommée *"Result",* d'un service WEB appelé *"Service1"* d'un équipement d'automatisme localisé à l'adresse : *"example.com".* L'exemple décrit simultanément plusieurs liaisons WSDL telles que les liaisons : SOAP, PROFInet, EtherNet/IP ou MODBUS/TCP et ceci à l'aide des éléments : <soap:binding...>, <PROFInet:binding,...>, <EtherNetIP:binding...>, <ModBusTCP:binding...>.
Exemple de document de description de service conforme au langage WSDL:

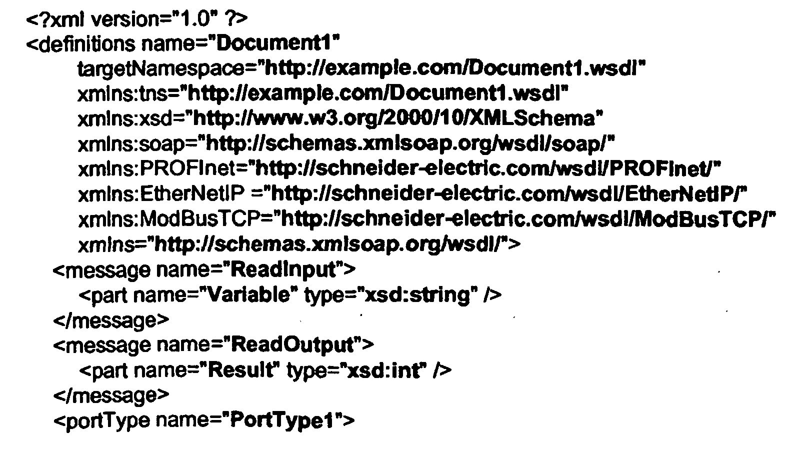

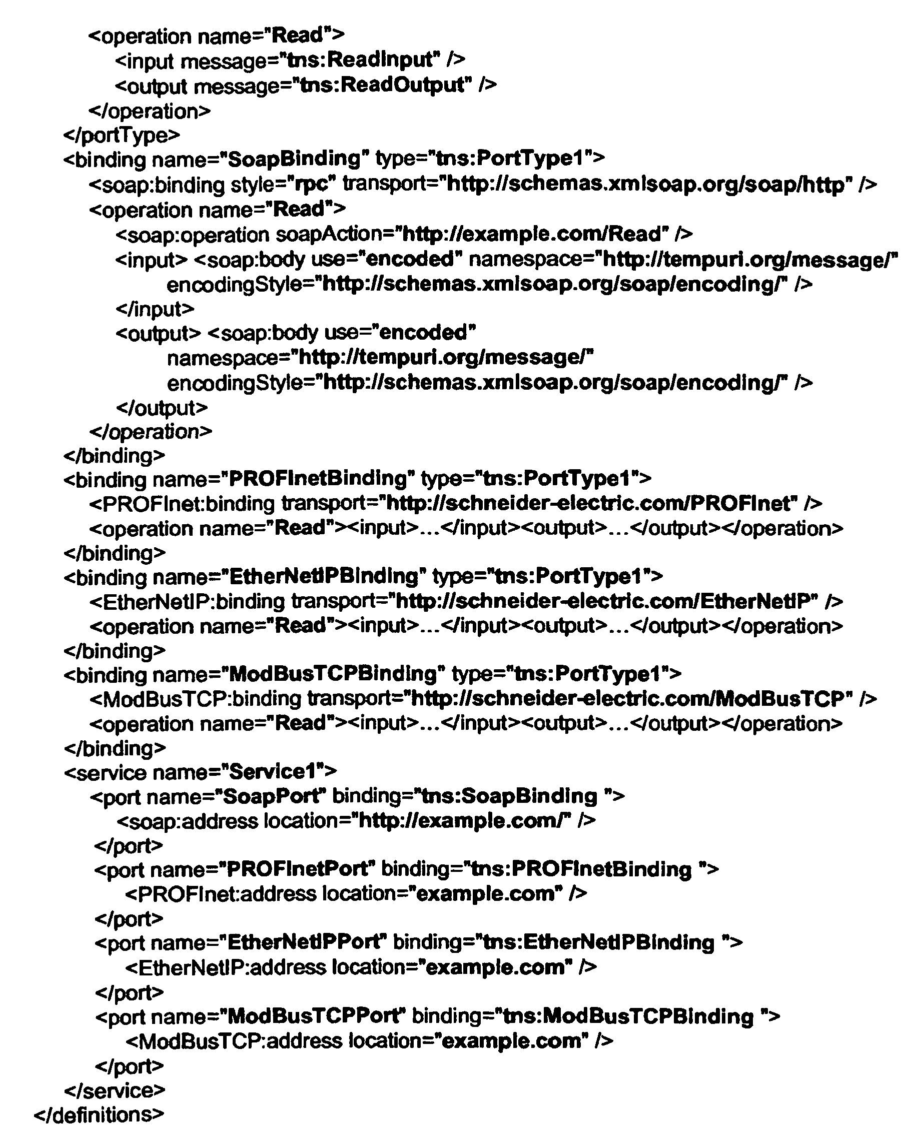

Etant donné l'aspect évolutif du langage WSDL, il sera possible d'ajouter des éléments nouveaux en assurant une compatibilité ascendante sans déstabiliser les développements antérieurs. De plus, on obtiendra une unification d'équipements très différents, en stockant et en rendant accessible par tous des documents de description de service qui décrivent les services qu'ils sont capables d'exposer.

Selon un autre mode de réalisation de l'invention, un document de description de service 61 relatif à un équipement d'automatisme 10 peut être découvert avec l'aide d'un document de découverte. Un document de découverte est une ressource accessible sur un réseau IP 50 au moyen d'une interface réseau IP permettant de récupérer des adresses URL, URI ou IP pointant sur des documents de description de service 61. Un document de découverte peut faire référence à d'autres documents de découverte associés, si besoin est.

Un document de découverte peut se présenter sous la forme d'une ou plusieurs pages WEB conformes aux langages de description de page WEB tel que HTML (HyperText Markup Language), WML (Wireless Markup Language) ou XHTML (XML HyperText Markup Language) proposant une ou plusieurs listes d'adresses URL, URI ou IP classées selon différents critères et pointant sur un ou des documents de description de service 61.

Le format d'un document de découverte d'un document de description de service 61 est préférentiellement conforme à des spécifications standardisées, notamment aux spécifications ADS (Advertisement and Discovery Services, définies par IBM Corporation), DISCO (Discovery, définies par Microsoft Corporation) ou UDDI (Universal Description, Discovery and Integration, publiées sur le site : http://www.uddi.org).

Un document de découverte d'un document de description de service 61 relatif à un équipement d'automatisme 10 est mémorisé soit dans des moyens de stockage 60 situés dans l'équipement d'automatisme 10, soit dans des moyens de stockage 60' situés dans un appareil intermédiaire 70 connecté à l'équipement d'automatisme 10 et à au moins un appareil distant 30, soit mémorisé dans des moyens de stockage 60" situés dans un serveur 80.

L'invention concerne également un procédé de communication mis en oeuvre dans un système de communication tel que décrit précédemment. Ce procédé comporte les étapes suivantes :
- Une première étape de découverte d'un ou plusieurs services WEB 21,21', dans laquelle une application informatique 31 ou une application de développement 41, s'exécutant dans un appareil distant 30,40, émettent sur le réseau IP 50 une requête 51 pour recevoir, dans une réponse 51, un ou plusieurs documents de description de service 61 conformes au langageWSDL et décrivant les capacités d'un ou plusieurs services WEB 21,21'. La requête 51 contient au moins une adresse URL, URI ou IP qui pointe sur un document de description de service 61 déjà mémorisé dans l'équipement d'automatisme 10, dans un appareil intermédiaire 70, ou dans un serveur 80. La requête 51 peut aussi pointer directement sur des moyens de stockage locaux d'un appareil distant 30,40. La requête 51 peut également pointer sur un générateur de document de description de service 62 qui construit alors dynamiquement un document de description de service 61 pour le renvoyer dans la réponse 51.
- Une deuxième étape de génération dans laquelle, grâce à un document de description de service 61 conforme au langage WSDL, il est possible de générer 52, de façon automatique ou manuelle, tout ou partie d'une application informatique 31 (grâce à des générateurs de codes 43,44) ou de générer un comportement dans une application informatique 31 (grâce à des interpréteurs de documents WSDL 33,34), de manière à ce que l'application informatique 31 d'un appareil distant 30 communique avec un service WEB 21,21' au moyen de messages 53 conformes au protocole de communication décrit dans le document de description de service 61,
- Une troisième étape de communication entre une application informatique 31 exécutée dans un appareil distant 30 et un service WEB 21,21' d'un équipement d'automatisme 10 sur le réseau IP 50, au moyen de messages 53 conformes au protocole de communication décrit le document de description de service 61.

Durant l'étape de génération, un deuxième appareil distant 40 exécutant une application de développement 41 peut générer tout ou partie d'une application informatique 31 soit localement dans le même deuxième appareil distant 40 soit à distance sur le réseau IP 50 vers un premier appareil distant 30. Ainsi l'application informatique 31 et l'application de développement 41 sont soit sur un même appareil distant 40, comme représenté en figure 7, soit sur deux appareils distants séparés communiquant par le réseau IP 50, comme représenté en figure 1.

Durant l'étape de découverte, une application informatique 31 (de même qu'une application de développement 41) peut utiliser un ou plusieurs documents de découverte pour rechercher un ou plusieurs documents de description de service 61, avec l'aide d'au moins une adresse URL, URI ou IP, décrivant un service WEB 21,21' relatif à un équipement d'automatisme 10.

## Revendications

1. Système de communication sur un réseau IP (50) entre un équipement d'automatisme (10) comportant au moins une unité de traitement capable d'exécuter au moins un programme (20) pour fournir des fonctions d'automatisme et un ou plusieurs appareils distants (30,40) exécutant une ou plusieurs applications informatiques, **caractérisé par le fait que** :
• le système de communication est conforme au langage WSDL (Web Services Description Language) dans le but de fournir à un appareil distant (30,40) des fonctions de surveillance, de visualisation, de contrôle, de configuration ou de programmation de l'équipement d'automatisme (10),
• le système de communication utilise au moins un document de description de service (61), conforme au langage WSDL, décrivant les capacités d'un ou plusieurs services WEB (21,21') capables d'interagir avec un programme (20) de l'équipement d'automatisme (10) et implantés dans l'équipement d'automatisme (10),
• chaque document de description de service (61) est accessible, pour un appareil distant (30,40), par une adresse URL, URI ou IP, à travers une interface réseau IP (15,15',15"),
• une application informatique (31), exécutée dans un appareil distant (30,40), est capable de communiquer avec un service WEB (21,21') au moyen de messages (53) encodés selon un protocole de communication conforme à au moins une liaison WSDL (binding) décrite dans le document de description de service (61),
• l'application informatique (31) utilise un interpréteur de documents WSDL (33,34) pour générer un comportement correspondant au document de description de service (61), ou une application de développement (41) utilise un générateur de codes (43,44) pour générer du code de l'application informatique (31) correspondant au document de description de service (61).

2. Système de communication selon la revendication 1, **caractérisé par le fait qu'**au moins une liaison WSDL (binding) décrite dans un document de description de service (61) est conforme à un des protocoles SOAP, HTTP ou MIME.

3. Système de communication selon la revendication 2, **caractérisé par le fait qu'**un document de description de service (61) décrit les capacités d'un service WEB (21,21') à exposer un service conforme à un protocole spécifique aux équipements d'automatisme.

4. Système de communication selon la revendication 1, **caractérisé par le fait qu'**au moins une liaison WSDL (binding) décrite dans un document de description de service (61) est conforme à un protocole spécifique aux équipements d'automatisme.

5. Système de communication selon la revendication 1, **caractérisé par le fait qu'**au moins une liaison WSDL (binding) décrite dans un document de description de service (61) est conforme à au moins une version encodée du protocole SOAP selon un format binaire.

6. Système de communication selon la revendication 1, **caractérisé par le fait que** le document de description de service (61) relatif à un équipement d'automatisme (10) est mémorisé dans des moyens de stockage (60) situés dans l'équipement d'automatisme (10).

7. Système de communication selon la revendication 1, **caractérisé par le fait que** le document de description de service (61) relatif à un équipement d'automatisme (10) est mémorisé dans des moyens de stockage (60') situés dans un appareil intermédiaire (70) connecté à l'équipement d'automatisme (10) et à au moins un appareil distant (30).

8. Système de communication selon la revendication 1, **caractérisé par le fait que** le document de description de service (61) relatif à un équipement d'automatisme (10) est mémorisé dans des moyens de stockage distants (60") situés dans un serveur (80).

9. Système de communication selon la revendication 1, **caractérisé par le fait qu'**il comporte un générateur de document de description de service (62) capable, à la suite d'une demande émanant d'un appareil distant (30,40), de construire dynamiquement un document de description de service (61) relatif à un équipement d'automatisme (10) et accessible, pour un appareil distant (30,40), par une adresse URL, URI ou IP, à travers une interface réseau IP (15,15',15").

10. Système de communication selon la revendication 1, **caractérisé par le fait qu'**un document de découverte de document de description de service (61) relatif à un équipement d'automatisme (10) est accessible, pour un appareil distant (30,40), par une adresse URL, URI ou IP.

11. Système de communication selon la revendication 10, **caractérisé par le fait que** le document de découverte d'un document de description de service (61) relatif à un équipement d'automatisme (10) est représenté par une ou plusieurs pages WEB conformes avec au moins un langage de description de page WEB, lequel document de découverte propose une ou plusieurs listes d'adresses URL, URI ou IP d'un ou plusieurs documents de description de service (61).

12. Système de communication selon la revendication 10, **caractérisé par le fait que** le format du document de découverte d'un document de description de service (61) relatif à un équipement d'automatisme (10) est conforme aux spécifications ADS (Advertisement and Discovery Services), DISCO (Discovery) ou UDDI (Universal Description, Discovery and Integration).

13. Système de communication selon la revendication 10, **caractérisé par le fait que** le document de découverte d'un document de description de service (61) relatif à un équipement d'automatisme (10) est mémorisé dans des moyens de stockage (60) situés dans l'équipement d'automatisme (10).

14. Système de communication selon la revendication 10, **caractérisé par le fait que** le document de découverte d'un document de description de service (61) relatif à un équipement d'automatisme (10) est mémorisé dans des moyens de stockage (60') situés dans un appareil intermédiaire (70) connecté à l'équipement d'automatisme (10) et à au moins un appareil distant (30).

15. Système de communication selon la revendication 10, **caractérisé par le fait que** le document de découverte d'un document de description de service (61) relatif à un équipement d'automatisme (10) est mémorisé dans des moyens de stockage distants (60") situés dans un serveur (80).

16. Procédé de communication mis en oeuvre dans un système de communication sur un réseau IP (50) entre un équipement d'automatisme (10) comportant au moins une unité de traitement capable d'exécuter au moins un programme (20) pour fournir des fonctions d'automatisme et un ou plusieurs appareils distants (30,40) exécutant une ou plusieurs applications informatiques, **caractérisé par le fait que** le procédé comporte les étapes suivantes :
• Une première étape de découverte de service WEB, dans laquelle une application informatique (31) ou une application de développement (41), s'exécutant dans un appareil distant (30,40), émet sur le réseau IP (50) une requête (51) pour recevoir, dans une réponse (51), un ou plusieurs documents de description de service (61) conformes au langage WSDL et décrivant les capacités d'un ou plusieurs services WEB (21,21') capables d'interagir avec un programme (20) de l'équipement d'automatisme (10),
• Une deuxième étape de génération dans laquelle :
- soit l'application informatique (31) utilise un interpréteur de documents WSDL (33,34) pour générer un comportement correspondant au document de description de service (61),
- soit l'application de développement (41) utilise un générateur de codes (43,44) pour générer du code de l'application informatique (31) correspondant au document de description de service (61),
de manière à ce que l'application informatique (31) d'un appareil distant (30) communique avec un service WEB (21,21') au moyen de messages (53) conformes au protocole de communication décrit dans le document de description de service (61),
• Une troisième étape de communication sur le réseau IP (50) entre l'application informatique (31) d'un appareil distant (30), et au moins un service WEB (21,21') implanté dans l'équipement d'automatisme (10), au moyen de messages (53) encodés selon un protocole de communication conforme à au moins une liaison WSDL (binding) décrite dans le document de description de service (61), dans le but de fournir à l'appareil distant (30) des fonctions de surveillance, de visualisation, de contrôle, de configuration ou de programmation de l'équipement d'automatisme (10).

17. Procédé de communication selon la revendication 16, **caractérisé par le fait que**, durant l'étape de découverte, l'application informatique (31) ou l'application de développement (41) peuvent utiliser un ou plusieurs documents de découverte pour découvrir un ou plusieurs documents de description de service (61) décrivant un service WEB (21,21') relatif à un équipement d'automatisme (10).

18. Procédé de communication selon la revendication 16, **caractérisé par le fait que**, durant l'étape de génération, une application de développement (41) s'exécutant dans un deuxième appareil distant (40) peut générer tout ou partie d'une application informatique (31) localement dans le deuxième appareil distant (40) ou dans un premier appareil distant (30) à travers le réseau IP (50).

## Patentansprüche

1. System zur Kommunikation über ein IP-Netz (50) zwischen einer Automationseinrichtung (10), die mindestens eine Verarbeitungseinheit aufweist, die in der Lage ist, mindestens ein Programm (20) auszuführen, um Automationsfunktionen zu liefern, und einem oder mehreren fernen Geräten (30, 40), die eine oder mehrere Informatikanwendungen ausführen, **dadurch gekennzeichnet, dass**:
• das Kommunikationssystem der WSDL-Sprache (Netz Services Description Language) mit dem Ziel entspricht, Überwachungs-, Anzeige-, Kontroll-, Konfigurations- oder Programmierungsfunktionen der Automationseinrichtung (10) an ein fernes Gerät (30, 40) zu liefern,
• das Kommunikationssystem mindestens ein Dienstbeschreibungsdokument (61) entsprechend der WSDL-Sprache verwendet, das die Kapazitäten eines oder mehrerer Webdienste (21, 21') beschreibt, die in der Lage sind, mit einem Programm (20) der Automationseinrichtung (10) zu interagieren und die in die Automationseinrichtung (10) eingesetzt sind,
• jedes Dienstbeschreibungsdokument (61) für ein fernes Gerät (30, 40) über eine URL-, URI- oder IP-Adresse mittels einer IP-Netz-Schnittstelle (15, 15', 15") zugänglich ist,
• eine Informatikanwendung (31), die in einem fernen Gerät (30, 40) ausgeführt wird, in der Lage ist, mittels Nachrichten (53), die gemäß einem Kommunikationsprotokoll entsprechend mindestens einer im Dienstbeschreibungsdokument (61) beschriebenen WSDL-Verbindung (binding) codiert sind, mit einem Webdienst (21, 21') zu kommunizieren,
• die Informatikanwendung (31) einen WSDL-Dokumentinterpreter (33, 34) verwendet, um ein Verhalten zu erzeugen, das dem Dienstbeschreibungsdokument (61) entspricht, oder eine Entwicklungsanwendung (41) einen Codegenerator (43, 44) verwendet, um Code der Informatikanwendung (31) entsprechend dem Dienstbeschreibungsdokument (61) zu erzeugen.

2. Kommunikationssystem nach Anspruch 1, **dadurch gekennzeichnet, dass** mindestens eine in einem Dienstbeschreibungsdokument (61) beschriebene WSDL-Verbindung (binding) einem der Protokolle SOAP, HTTP oder MIME entspricht.

3. Kommunikationssystem nach Anspruch 2, **dadurch gekennzeichnet, dass** ein Dienstbeschreibungsdokument (61) die Kapazitäten eines Webdiensts (21, 21') beschreibt, einen Dienst entsprechend einem für die Automationseinrichtungen spezifischen Protokoll darzustellen.

4. Kommunikationssystem nach Anspruch 1, **dadurch gekennzeichnet, dass** mindestens eine in einem Dienstbeschreibungsdokument (61) beschriebene WSDL-Verbindung (binding) einem für die Automationseinrichtungen spezifischen Protokoll entspricht.

5. Kommunikationssystem nach Anspruch 1, **dadurch gekennzeichnet, dass** mindestens eine in einem Dienstbeschreibungsdokument (61) beschriebene WSDL-Verbindung (binding) mindestens einer codierten Version des SOAP-Protokolls gemäß einem Binärformat entspricht.

6. Kommunikationssystem nach Anspruch 1, **dadurch gekennzeichnet, dass** das Dienstbeschreibungsdokument (61) bezüglich einer Automationseinrichtung (10) in Speichermitteln (60) gespeichert ist, die sich in der Automationseinrichtung (10) befinden.

7. Kommunikationssystem nach Anspruch 1, **dadurch gekennzeichnet, dass** das Dienstbeschreibungsdokument (61) bezüglich einer Automationseinrichtung (10) in Speichermitteln (60') gespeichert ist, die sich in einem Zwischengerät (70) befinden, das mit der Automationseinrichtung (10) und mit mindestens einem fernen Gerät (30) verbunden ist.

8. Kommunikationssystem nach Anspruch 1, **dadurch gekennzeichnet, dass** das Dienstbeschreibungsdokument (61) bezüglich einer Automationseinrichtung (10) in fernen Speichermitteln (60") gespeichert ist, die sich in einem Server (80) befinden.

9. Kommunikationssystem nach Anspruch 1, **dadurch gekennzeichnet, dass** es einen Dienstbeschreibungsdokumentgenerator (62) aufweist, der nach einer von einem fernen Gerät (30, 40) kommenden Anfrage in der Lage ist, dynamisch ein Dienstbeschreibungsdokument (61) bezüglich einer Automationseinrichtung (10) zu konstruieren, das für ein fernes Gerät (30, 40) über eine Adresse URL, URI oder IP mittels einer IP-Netz-Schnittstelle (15, 15', 15") zugänglich ist.

10. Kommunikationssystem nach Anspruch 1, **dadurch gekennzeichnet, dass** ein Entdeckungsdokument eines Dienstbeschreibungsdokuments (61) bezüglich einer Automationseinrichtung (10) für ein fernes Gerät (30, 40) über eine Adresse URL, URI oder IP zugänglich ist.

11. Kommunikationssystem nach Anspruch 10, **dadurch gekennzeichnet, dass** das Entdeckungsdokument eines Dienstbeschreibungsdokuments (61) bezüglich einer Automationseinrichtung (10) von einer oder mehreren Webseiten dargestellt wird, die mindestens einer Webseiten-Beschreibungssprache entsprechen, wobei das Entdeckungsdokument eine oder mehrere Listen von Adressen URL, URI oder IP eines oder mehrerer Dienstbeschreibungsdokumente (61) vorschlägt.

12. Kommunikationssystem nach Anspruch 10, **dadurch gekennzeichnet, dass** das Format des Entdeckungsdokuments eines Dienstbeschreibungsdokuments (61) bezüglich einer Automationseinrichtung (10) den Spezifikationen ADS (Advertisement and Discovery Services), DISCO (Discovery) oder UDDI (Universal Description, Discovery and Integration) entspricht.

13. Kommunikationssystem nach Anspruch 10, **dadurch gekennzeichnet, dass** das Entdeckungsdokument eines Dienstbeschreibungsdokuments (61) bezüglich einer Automationseinrichtung (10) in Speichermitteln (60) gespeichert ist, die sich in der Automationseinrichtung (10) befinden.

14. Kommunikationssystem nach Anspruch 10, **dadurch gekennzeichnet, dass** das Entdeckungsdokument eines Dienstbeschreibungsdokuments (61) bezüglich einer Automationseinrichtung (10) in Speichermitteln (60') gespeichert ist, die sich in einem Zwischengerät (70) befinden, das mit der Automationseinrichtung (10) und mit mindestens einem fernen Gerät (30) verbunden ist.

15. Kommunikationssystem nach Anspruch 10, **dadurch gekennzeichnet, dass** das Entdeckungsdokument eines Dienstbeschreibungsdokuments (61) bezüglich einer Automationseinrichtung (10) in fernen Speichermitteln (60") gespeichert ist, die sich in einem Server (80) befinden.

16. Kommunikationsverfahren, das in einem System zur Kommunikation über ein IP-Netz (50) zwischen einer Automationseinrichtung (10), die mindestens eine Verarbeitungseinheit aufweist, die in der Lage ist, mindestens ein Programm (20) auszuführen, um Automationsfunktionen zu liefern, und einem oder mehreren fernen Geräte (30, 40) angewendet wird, die eine oder mehrere Informatikanwendungen ausführen, **dadurch gekennzeichnet, dass** das Verfahren die folgenden Schritte enthält:
• einen ersten Schritt der Entdeckung eines Webdiensts, in dem eine Informatik- (31) oder eine Entwicklungsanwendung (41), die in einem fernen Gerät (30, 40) ausgeführt wird, über das IP-Netz (50) eine Anfrage (51) aussendet, um in einer Antwort (51) eines oder mehrere Dienstbeschreibungsdokumente (61) entsprechend der WSDL-Sprache zu empfangen, die die Kapazitäten eines oder mehrerer Webdienste (21, 21') beschreiben, die in der Lage sind, mit einem Programm (20) der Automationseinrichtung (10) zu interagieren,
• einen zweiten Schritt der Erzeugung, in dem:
- entweder die Informatikanwendung (31) einen WSDL-Dokumentinterpreter (33, 34) verwendet, um ein Verhalten entsprechend dem Dienstbeschreibungsdokument (61) zu erzeugen,
- oder die Entwicklungsanwendung (41) einen Codegenerator (43, 44) verwendet, um Code der Informatikanwendung (31) entsprechend dem Dienstbeschreibungsdokument (61) zu erzeugen,
damit die Informatikanwendung (31) eines fernen Geräts (30) mit einem Webdienst (21, 21') mittels Nachrichten (53) kommuniziert, die dem in dem Dienstbeschreibungsdokument (61) beschriebenen Kommunikationsprotokoll entsprechen,
• einen dritten Schritt der Kommunikation über das IP-Netz (50) zwischen der Informatikanwendung (31) eines fernen Geräts (30) und mindestens einem Webdienst (21, 21'), der in die Automationseinrichtung (10) eingesetzt ist, mittels Nachrichten (53), die gemäß einem Kommunikationsprotokoll entsprechend mindestens einer im Dienstbeschreibungsdokument (61) beschriebenen WSDL-Verbindung (binding) codiert sind, mit dem Ziel, Überwachungs-, Anzeige-, Kontroll-, Konfigurations- oder Programmierungsfunktionen der Automationseinrichtung (10) an das ferne Gerät (30) zu liefern.

17. Kommunikationssystem nach Anspruch 16, **dadurch gekennzeichnet, dass** während des Entdeckungsschritts die Informatikanwendung (31) oder die Entwicklungsanwendung (41) eines oder mehrere Entdeckungsdokumente verwenden kann, um eines oder mehrere Dienstbeschreibungsdokumente (61) zu entdecken, die einen Webdienst (21, 21') bezüglich einer Automationseinrichtung (10) beschreiben.

18. Kommunikationssystem nach Anspruch 16, **dadurch gekennzeichnet, dass** während des Erzeugungsschritts eine Entwicklungsanwendung (41), die in einem zweiten fernen Gerät (40) ausgeführt wird, die ganze oder einen Teil einer Informatikanwendung (31) lokal im zweiten fernen Gerät (40) oder einem ersten fernen Gerät (30) über das IP-Netz (50) erzeugen kann.

## Claims

1. Communication system on an IP network (50) between automation equipment (10) with at least one processing unit capable of executing at least one program (20) to provide automation functions and one or more remote items of equipment (30, 40) executing one or more computer applications,
**characterized by** the fact that:
• the communication system is conform with the WSDL (Web Services Description Language) language in order to provide remote equipment (30, 40) with the monitoring, display, control, configuration or programming functions of the automation equipment (10),
• the communication system uses at least one service description document (61) conform with the WSDL language that describes the capabilities of one or more WEB services (21, 21') capable of interacting with a program (20) of the automation equipment (10) and installed on the automation equipment (10),
• each service description document (61) is accessible to remote equipment (30, 40) by a URL, URI or IP address through an IP network interface (15, 15', 15"),
• a computer application (31) executed on remote equipment (30, 40) is capable of communicating with a WEB service (21, 21') by means of messages (53) encoded according to a communication protocol conform with at least one WSDL binding described in the service description document (61),
• the computer application (31) uses a WSDL document interpreter (33, 34) to generate a behaviour corresponding to the service description document (61), or a development application (41) uses a code generator (43, 44) to generate computer application code (31) corresponding to the service description document (61).

2. Communication system according to claim 1, **characterized by** the fact that at least one WSDL binding described in a service description document (61) is conform with the SOAP, the HTTP or the MIME protocol.

3. Communication system according to claim 2, **characterized by** the fact that a service description document (61) describes the capabilities of a WEB service (21, 21') to present a service conform with a protocol specific to the automation equipment.

4. Communication system according to claim 1, **characterized by** the fact that at least one WSDL binding described in a service description document (61) is conform with a protocol specific to the automation equipment.

5. Communication system according to claim 1, **characterized by** the fact that at least one WSDL binding described in a service description document (61) is conform with at least one version of the SOAP protocol encoded in a binary format.

6. Communication system according to claim 1, **characterized by** the fact that the service description document (61) related to automation equipment (10) is memorized in storage means (60) located in the automation equipment (10).

7. Communication system according to claim 1, **characterised by** the fact that the service description document (61) related to automation equipment (10) is memorized in storage means (60') located in intermediate equipment (70) connected to the automation equipment (10) and to at least one item of remote equipment (30).

8. Communication system according to claim 1, **characterised by** the fact that the service description document (61) for automation equipment (10) is memorized in remote storage means (60") located in a server (80).

9. Communication system according to claim 1, **characterised by** the fact that it comprises a service description document generator (62) capable of dynamically building a service description document (61) relating to automation equipment (10) following a request from remote equipment (30, 40), and accessible to remote equipment (30, 40) by an URL, URI or IP address through an IP network interface (15, 15', 15").

10. Communication system according to claim 1, **characterised by** the fact that a discovery document for a service description document (61) related to automation equipment (10) is accessible to remote equipment (30, 40) through an URL, URI or IP address.

11. Communication system according to claim 10, **characterised by** the fact that the discovery document for a service description document (61) related to automation equipment (10) is represented by one or more WEB pages conform with at least one WEB page description language, the said discovery document proposes one or more lists of URL, URI or IP addresses for one or more service description documents (61).

12. Communication system according to claim 10, **characterised by** the fact that the format of the discovery document of a service description document (61) related to automation equipment (10) is conform with the ADS (Advertisement and Discovery Services) specifications, the DISCO (Discovery) specifications or the UDDI (Universal Description, Discovery and Integration) specifications.

13. Communication system according to claim 10, **characterised by** the fact that the discovery document for a service description document (61) related to automation equipment (10) is memorized in storage means (60) located in the automation equipment (10).

14. Communication system according to claim 10, **characterised by** the fact that the discovery document for a service description document (61) related to automation equipment (10) is memorized in storage means (60') located in intermediate equipment (70) connected to the automation equipment (10) and to at least one item of remote equipment (30).

15. Communication system according to claim 10, **characterised by** the fact that the discovery document for a service description document (61) related to automation equipment (10) is memorized in remote storage means (60") located in a server (80).

16. Communication process used in a communication system on an IP network (50) between automation equipment (10) comprising at least one processing unit capable of executing at least one program (20) to provide automation functions and one or more remote items of equipment (30, 40) executing one or more computer applications, **characterised by** the fact that the process comprises the following steps:
• a first step for the discovery of a WEB service, in which a computer application (31) or a development application (41) executing in remote equipment (30, 40) sends a request (51) on the IP network (50) to receive a response (51) with one or more service description documents (61) conform with the WSDL language and describing the capabilities of one or more WEB services (21, 21') capable of interacting with a program (20) of the automation equipment (10),
• a second generation step in which:
- either the computer application (31) uses a WSDL document interpreter (33, 34) to generate a behaviour corresponding to the service description document (61),
- or the development application (41) uses a code generator (43, 44) to generate computer application code (31) corresponding to the service description document (61),
such that the computer application (31) of remote equipment (30) communicates with a WEB service (21, 21') by means of messages (53) conform with the communication protocol described in the service description document (61),
• a third communication step on the IP network (50) between a computer application (31) on remote equipment (30) and at least one WEB service (21, 21') installed on the automation equipment (10) using messages (53) encoded under a communication protocol conform with at least one WSDL binding described in the service description document (61), with the aim of providing the remote equipment (30) with the monitoring, display, control, configuration or programming functions of the automation equipment (10).

17. Communication process according to claim 16, **characterised by** the fact that during the discovery step, the computer application (31) or the development application (41) may use one or more discovery documents to discover one or more service description documents (61) describing a WEB service (21, 21') related to automation equipment (10).

18. Communication process according to claim 16, **characterised by** the fact that during the generation step, a development application (41) being executed in a second item of remote equipment (40) may generate all or some of a computer application (31) locally in the second item of remote equipment (40) or in a first item of remote equipment (30) through the IP network (50)
